# EUROPÄISCHE PATENTSCHRIFT

(11) **EP 3 664 584 B1**
(45) Veröffentlichungstag und Bekanntmachung des Hinweises auf die Patenterteilung: **25.01.2023**
(21) Anmeldenummer: 19214055.6
(22) Anmeldetag: 06.12.2019
(51) Int. Cl.: H05B 47/13, H05B 47/19

(54) **SELBSTTÄTIG SCHALTENDES LICHTSYSTEM FÜR EIN GEBÄUDE MIT OPTIONALER ANBINDUNG AN EIN LMS- BZW. BMS-SYSTEM ZU ANALYSE UND STEUERUNGS-ZWECKEN**
AUTOMATICALLY SWITCHING LIGHT SYSTEM FOR A BUILDING WITH OPTIONAL ATTACHMENT TO AN LMS OR BMS SYSTEM FOR ANALYSIS AND CONTROL PURPOSES
SYSTÈME D'ÉCLAIRAGE À COMMUTATION AUTOMATIQUE POUR UN BÂTIMENT POURVU DE CONNEXION OPTIONNELLE À UN SYSTÈME LMS OU BMS À DES FINS D'ANALYSE ET DE COMMANDE

(30) Priorität: 06.12.2018 DE 102018009603; 01.03.2019 DE 102019105206
(43) Veröffentlichungstag der Anmeldung: 10.06.2020
(73) Patentinhaber: Siteco GmbH, 83301 Traunreut (DE)
(72) Erfinder: Bornemann, Lars, 83254 Breitbrunn (DE); König, Christian, 84558 Kirchweidach (DE)
(74) Vertreter: Schmidt, Steffen

(56) Entgegenhaltungen:
- WO-A1-2016/065382
- WO-A1-2017/139707
- DE-A1- 2 425 721
- DE-A1-102012 202 148
- JP-A- H08 227 609
- SE-C2- 529 781
- US-A1- 2016 323 958
- Anonymous: "Beleuchtung über Schütz", , 9. Oktober 2012 (2012-10-09), XP055680235, Gefunden im Internet: URL:https://www.elektrikforum.de/threads/b eleuchtung-ueber-schuetz.18886/ [gefunden am 2020-03-26]

## Beschreibung

Die vorliegende Erfindung betrifft ein selbsttätig schaltendes Lichtsystem für ein Gebäude und ein Verfahren zum Sanieren eines Bestands-Lichtsystems

SE 529 781 C2 betrifft eine Leuchtanordnung gemäß dem Oberbegriffs des Anspruchs 1.

WO 2017/139707 A1 betrifft ein System zum Ändern des Lichtniveaus von eines oder mehrerer Leuchtkörper, die mit einer Steuervorrichtung, wie einem Timer oder einem Beleuchtungspaneel, verbunden sind, unter Verwendung ausschließlich konventioneller Relais oder Leuchtpaneele.

US 2016/323958 A1 beschreibt einen DCR-fähigen Leuchtkörper, der auf verschiedene digitale Kontrollsignale von unterschiedlichen digitalen Steuermitteln reagiert.

JP H08 227609 A beschreibt eine Hitzestrahlung sensierende, automatische Schaltervorrichtung, die den Zutritt einer Person in einen Raum erkennt und einen Leuchtkörper ansteuert.

Sollen bei der Sanierung eines Lichtsystems die Leuchten in einem Bereich abhängig von der Anwesenheit einer Person gesteuert werden, wird aufgrund der hohen Schaltlasten der Leuchten ein Schütz verwendet (Lastseite). Die Personen-Sensoren steuern die Schützspule an (Steuerseite). Somit wird vermieden, dass das innenliegende Relais der Personensensoren überlastet wird. Das Schütz wird dabei in der zentralen Unterverteilung montiert. Zwischen Unterverteilung und Lichtsystem müssen zusätzliche Kabel und Leitungen montiert werden, um die Leuchten bewegungsabhängig zu steuern.

Aufgabe der vorliegenden Erfindung ist es, ein Lichtsystem bereitzustellen, das einfacher realisiert werden kann.

Gelöst wird die Aufgabe durch ein Lichtsystem nach Anspruch 1 und ein Verfahren zum Sanieren eines Bestands-Lichtsystems für ein Gebäude mit einer Vielzahl von Leuchten und einer Unterverteilung gemäß Anspruch 11.

Insbesondere wird hierzu ein selbsttätig schaltendes Lichtsystem für ein Gebäude bereitgestellt, umfassend:
- eine Vielzahl von Leuchten,
- einen Personen-Sensor zum Detektieren einer Person und
- ein durch den Personen-Sensor geschalteten Schütz zum Schalten wenigstens einer Teilgruppe der Vielzahl von Leuchten des Lichtsystems.

Eine Besonderheit des Lichtsystems gemäß der vorliegenden Erfindung besteht darin, dass der Schütz in einer Zuleitung vom Lichtsystem zu einer Unterverteilung des Gebäudes angeordnet ist. Dies hat den Vorteil, dass das Lichtsystem basierend auf dem Personen-Sensor geschaltet werden kann, ohne die Unterverteilung verändern zu müssen. Weiterhin kann ein Verkabelungsaufwand reduziert werden, da Kabel von Personen-Sensoren zum Schütz nicht bis zur Unterverteilung geführt werden müssen.

Das Lichtsystem kann für den Innenbereich, für den gebäudenahen Bereich oder für den Außenbereich ausgebildet sein. Das Lichtsystem kann mit einer Anbindung an ein LMS- oder BMS-System zur Analyse und Steuerungszwecken ausgebildet sein.

Eine Unterverteilung ist nach dem Hausanschlusskasten oder einer Zähleranschlusssäule die erste Aufteilungsstelle im Gebäude. Die Unterverteilung kann auch als Niederspannungsunterverteilung (NSUV oder NUV) bezeichnet werden. Die Unterverteilung befindet sich vorzugsweise im Keller oder in einem Hausanschlussraum. In der Unterverteilung können ein oder mehrere Stromzähler und gegebenenfalls Rundsteuerempfänger eingebaut sein kann. Die Größe der Unterverteilungen (Zählerplatz) sind nach DIN 18012, DIN 18013 (Hausanschlussnischen) sowie der VDE-AR-N 4101 (Ausführung) geregelt, dabei ist in Wohnhäusern die Anzahl der Zähler von Bedeutung.

Stromversorgungssysteme müssen bei Neuinstallationen gemäß der TAB 2007 sowie der DIN 18015-1 als Strahlennetze ausgeführt werden. In kleinen Gebäuden ist die Unterverteilung häufig die einzige Verteilung, wobei bei Vorhandensein mehrerer Stockwerke/Ebenen (z. B. Keller, Erdgeschoss, Obergeschoss) eine Errichtung von Unterverteilungen je Etage vorgeschrieben ist (DIN 18015-2). Unterverteilungen können weitere NSUV einspeisen. In größeren Gebäuden und Industriebetrieben sind in der Regel zusätzliche Unterverteilungen und Gruppenverteilungen vorhanden.

Vorzugsweise kann die Unterverteilung mit dem Lastschütz über ein zumindest 5-poliges Kabel verbunden sein. Insbesondere kann hierbei Drehstrom zum Einsatz kommen. Vorzugsweise schaltet der Schütz dabei zumindest drei Pole.

Außer der Leistungsversorgung über den Drehstrom kann vorgesehen sein, dass das Lichtsystem über eine weitere, vorzugsweise separat zugeführte, Stromversorgung mit Strom versorgt wird. Die separate Stromversorgung kann z.B. für Notstromleuchten und zum Betrieb von Elektronik verwendet werden.

Vorzugsweise wird der Schütz außerhalb eines Verteilerkastens der Unterverteilung angeordnet, insbesondere mit einem Abstand von zumindest fünf Metern entfernt von dem Verteilerkasten.

Vorzugsweise schaltet das Schütz nur die Leistungszuführung für die primären Leuchten des Leuchtsystems. Elektronische Schaltungen des Lichtsystems, insbesondere der Personen-Sensor, werden vorzugsweise über eine weitere Stromversorgung auch dann mit Strom versorgt, wenn der Schütz abschaltet. Hierzu kann z.B. ein mindestens 7-poliges Kabel zum Einsatz kommen, wobei fünf Pole den Drehstrom liefern und zwei Pole für die Versorgung mit der sekundären Stromquelle vorgesehen sind. In anderen Ausführungsformen weist die sekundäre Stromversorgung mehr als zwei Pole auf.

Das Lichtsystem kann mit einem Bus-System ausgestattet sein, wobei das Bus-System auch dazu ausgebildet sein kann, eine gewisse geringe Leistung zur Versorgung von elektronischen Schaltungen bereitzustellen.

In einer erfindungsgemäßen Ausführungsform ist vorgesehen, dass der Personen-Sensor und/oder der Schütz über Funk mit einer Steuerung verbunden ist, die dazu ausgebildet ist, den Schütz anzusteuern. Die Lastkontakte des Schützes schalten dann die Leuchten EIN oder AUS.

In einer weiteren bevorzugten Ausführungsform ist vorgesehen, dass der Personen-Sensor einem LMS/BMS-System oder einer Steuerung drahtlos verbunden ist, wobei die Steuerung das LMS/BMS-System oder die Steuerung dazu ausgebildet ist, den Schütz anzusteuern. Vorzugsweise ist das LMS/BMS-System oder die Steuerung zentral in dem Gebäude angeordnet. Die Ansteuerung des Schützes kann entweder über das LMS/BMS-System, die Steuerung direkt über die interne programmierte Funktion/Logik oder bewegungsabhängig über die entsprechenden Bewegungs-Sensoren im Feld erfolgen. Dies hat den Vorteil, dass keine Verbindungsleitung zwischen Schütz/Sensor und dem LMS/BMS- oder Steuerungssystem zu verlegen ist.

In einer weiteren bevorzugten Ausführungsform ist vorgesehen, dass der Schütz zumindest drei Phasen schaltet. Insbesondere kann es sich um eine durch den Schütz geschaltete Drehstromanbindung handeln.

In einer bevorzugten Ausführungsform ist vorgesehen, dass das Lichtsystem eine Netzeinspeiseklemme umfasst, wobei der Schütz in der Zuleitung zwischen der Unterverteilung und der Netzeinspeiseklemme nah an den Leuchten bzw. in/an der Netzeinspeiseklemme der Leuchten angeordnet ist, d.h. insbesondere innerhalb von 50cm oder vorzugsweise innerhalb von 20cm von der Leuchte oder der Netzeinspeiseklemme.

Die Netzeinspeiseklemme kann vorzugsweise Klemmen für alle fünf Pole einer Drehstromversorgungsleiste aufweisen. Es können weitere Einspeiseklemmen vorgesehen sein, die das Lichtsystem mit einem weiteren Stromkreis versorgt, z.B. einem Niederleistungs-Stromkreis. Über den Niederleistungs-Stromkreis können Elektronik oder ggf. auch Leuchten in Notausgangsschildern mit Strom versorgt werden.

In einer weiteren bevorzugten Ausführungsform ist vorgesehen, dass die Vielzahl von Leuchten als Lichtband angeordnet ist. Insbesondere kann es sich um Lichtbänder für Regalschränke handeln.

In einer weiteren bevorzugten Ausführungsform ist vorgesehen, dass die Vielzahl von Leuchten als Leuchteneinsätze für ein Tragschienensystem ausgebildet ist und/oder der Personen-Sensor auf dem Tragschienensystem angeordnet ist.

In einer weiteren bevorzugten Ausführungsform ist vorgesehen, dass der Personen-Sensor ein Bewegungssensor, insbesondere ein Passiv-Infrarot-Sensor, ein HF-Sensor, ein Lidar-Sensor und/oder ein Kamera-Sensor etc. ist. Insbesondere kann eine Vielzahl von derartigen Bewegungssensoren vorgesehen sein.

In einer weiteren bevorzugten Ausführungsform umfasst das Lichtsystem weiterhin einen Speicher zur Erfassung der Schaltvorgänge des Schützes. Der Speicher kann zum Beispiel im LMS/BMS-System oder mit der Steuerung verbunden angeordnet sein. Der Speicher kann z.B. Uhrzeit, Datum und Art des Schaltvorgangs (z.B. An/Aus), Einschaltzeit erfassen und an das übergeordnete LMS/BMS-System oder der Steuerung zur weiteren Analyse weiter leiten. Daraus können zum Beispiel Profile über Energieverbrauch oder Frequentierung ermittelt werden. Somit kann auch im Nachhinein eine Analyse und Auswertung der Sensor- und Schaltdaten erfolgen. Insbesondere kann die Steuereinheit dazu ausgebildet sein, Analyse- und Auswertungsfunktionen bereitzustellen.

In einer weiteren Ausführungsform ist vorgesehen, dass das System weiterhin zumindest einen Temperatursensor und/oder zumindest einen Lichtsensor umfasst, wobei das System dazu ausgebildet ist, Temperaturmesswerte von dem zumindest einen Temperatursensor und/oder Lichtmesswerte von dem zumindest einen Lichtsensor, insbesondere über Funk, an eine zentrale Einheit zu übertragen. Die Funkverbindungen sind also vorzugsweise so ausgebildet, dass eine zentrale Steuereinheit sowohl Messdaten von den Sensoren empfangen kann, als auch Steuerdaten, z.B. zum Ein- oder Ausschalten des Schützes, an den Schütz senden kann.

Insbesondere kann vorgesehen sein, dass der Schütz einen integrierten Temperatursensor aufweist, der eine Temperatur des Schützes misst. Die gemessenen Temperaturen können per Funk an die zentrale Einheit übertragen werden. Bei Überschreiten eines bestimmten Temperaturschwellwerts kann die zentrale Einheit einen Alarm auslösen.

In einer weiteren Ausführungsform ist vorgesehen, dass die zentrale Einheit eine Analyseeinheit umfasst, die dazu ausgebildet ist, die Sensordaten zu analysieren. Somit können die Sensordaten zentral erfasst, analysiert und ausgewertet werden. Abhängig von der Auswertung kann dann von einer Steuerlogik eine Entscheidung über einen Schaltvorgang des Schützes getroffen werden.

Zum Beispiel kann die Steuerlogik dazu ausgebildet sein, den Schütz nur dann einzuschalten, wenn sowohl der Personen-Sensor eine Person detektiert als auch der Lichtsensor misst, dass die Umgebungshelligkeit geringer als ein vorgegebener Schwellwert ist.

In einer weiteren bevorzugten Ausführungsform ist vorgesehen, dass der Schütz dazu ausgebildet ist mindestens 1kW, vorzugsweise mindestens 10kW, zu schalten.

Ein weiterer Aspekt der Erfindung bezieht sich auf ein Verfahren zum Sanieren eines Bestands-Lichtsystems für ein Gebäude mit einer Vielzahl von Leuchten, wobei das Verfahren umfasst:
- Einbauen eines Personen-Sensors zum Detektieren einer Person in das Bestands-Lichtsystem,
- Einbauen eines durch den Personen-Sensor geschalteten Schütz zum Schalten wenigstens einer Teilgruppe der Vielzahl von Leuchten des Bestands-Lichtsystems in einer Zuleitung zwischen der Unterverteilung des Gebäudes und der Vielzahl von Leuchten des Bestands-Lichtsystems, und
- Verbinden des Personen-Sensors und/oder des Schütz über Funk mit einer Steuerung, die dazu ausgebildet ist, den Schütz anzusteuern.

In einer weiteren bevorzugten Ausführungsform ist vorgesehen, dass der Schütz in die Zuleitung zwischen einer Netzeinspeiseklemme des Lichtsystems und der Unterverteilung eingebaut wird.

Weitere Merkmale und Vorteile der vorliegenden Erfindung werden aus der nachfolgenden detaillierten Beschreibung einer Ausführungsform deutlich, welche in Bezug auf die beigefügte Figur gegeben wird.
Figur 1 zeigt ein Lichtsystem aus dem Stand der Technik;
Figur 2 zeigt ein weiteres Lichtsystem aus dem Stand der Technik; und
Figur 3 zeigt ein weiteres Lichtsystem, welches zum Verständnis der Erfindung hilfreich ist.
Figur 4 ein erfindungsgemäßes Lichtsystem.

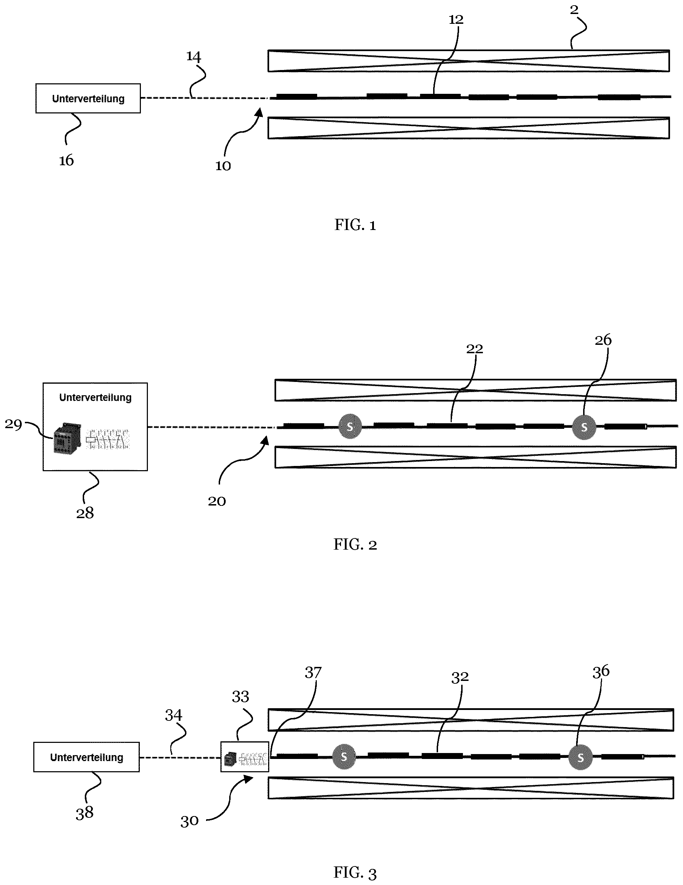

Das in Figur 1 gezeigten Lichtsystem 10 weist eine Vielzahl von Leuchteneinsätzen 12 auf, die in einem Tragschienensystem 2 angeordnet sind. Über eine Zuleitung 14 ist das Lichtsystem 10 mit der Unterverteilung 16 verbunden.

Das in Figur 2 gezeigte Lichtsystem 20 umfasst neben den Leuchteneinsätzen 22 weiterhin Bewegungs-Sensoren 26. Das Lichtsystem 20 wird über eine Zuleitung 24 mit der Unterverteilung 28 verbunden. Die Unterverteilung 28 umfasst dabei einen Schütz 29. Die Zuleitung 24 ist ein mindestens 7-poliges Kabel. Dabei sind 5 Pole für die Versorgung mit Drehstrom bestimmt und 2 Pole für die Verbindung der Bewegungs-Sensoren 26 mit der Unterverteilung.

Das in Figur 3 gezeigte Lichtsystem 30 umfasst eine Vielzahl von Leuchteneinsätzen 32, die als Leuchtband angeordnet sind. Weiterhin umfasst das Lichtsystem 30 Bewegungs-Sensoren 36, die insbesondere eine Bewegung von einer Person erfassen können. Vorzugsweise sind die Bewegungs-Sensoren 36 dabei so ausgebildet und angeordnet, dass sie die Bewegung einer Person vor dem Tragschienensystem 2 erfassen. Die Bewegungs-Sensoren 36 sind dabei über ein Kabel mit einer Elektronik (nicht dargestellt in Figur 3) verbunden. Die Elektronik schaltet abhängig von einem Signal der Sensoren das Schütz 33, das in der Zuleitung 34 von dem Lichtsystem 30 zur Unterverteilung 38 angeordnet ist.

Das Lichtsystem 30 wird über eine Netzeinspeiseklemme 37 mit der Zuleitung 34 verbunden, die das Lichtsystem 30 mit der Unterverteilung 38 verbindet. Das Schütz 33 ist dabei aus Sicht des Lichtsystems hinter der Netzeinspeiseklemme 37 angeordnet, d.h. zwischen Netzeinspeiseklemme 37 und Unterverteilung 38.

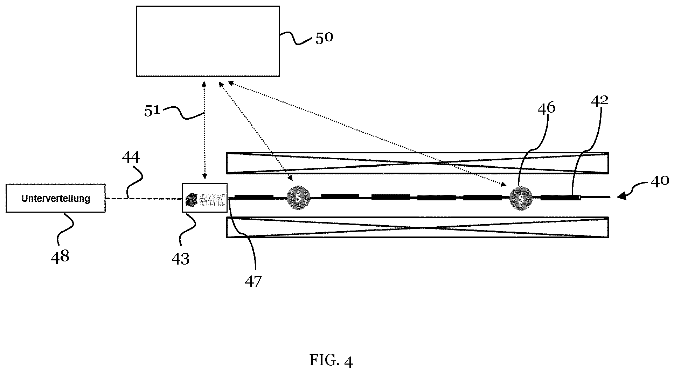

Figur 4 zeigt ein erfindungsgemäßes Lichtsystem 40 mit einer Vielzahl von Leuchten 42. Ähnlich wie bei dem in Figur 3 gezeigten Lichtsystem 30 ist die Vielzahl von Leuchten 42 über eine Netzeinspeiseklemme 47, und einen Schütz 43 in einer Zuleitung 44 mit einer Unterverteilung 48 verbunden.

Bei dem Lichtsystem 40 der Figur 4 ist der Schütz 43 über eine, vorzugsweise bidirektionale, Funkverbindung 51 mit einer zentralen Steuereinheit 50, z.B. einer Steuereinheit eines Building-Management-Systems oder eines Light-Management-Systems, verbunden. Ebenso die die Personen-Sensoren 46 über eine bidirektionale Funkverbindung 51 mit der Steuereinheit 50 verbunden. Somit können die Personen-Sensoren 46 Informationen über die Anwesenheit einer Person an die Steuereinheit 50 übertragen.

Die Funkverbindungen 51 sind vorzugsweise zumindest bidirektional in dem Sinne, dass die Sensoren Daten senden können und der Schütz Daten von einer zentralen Einheit empfangen kann. Der Schütz kann aber auch einen Temperaturwert (z.B. Umgebungstemperatur) an die zentrale Einheit schicken. Die Temperaturwerte werden benötigt um zum Beispiel eine Überlastung des Schützes z. B. wegen zu hoher Umgebungstemperatur oder Überlastung durch zu viel angeschlossene Schaltlasten oder wegen Kontakt-Alterung zu analysieren und daraus Warnmeldungen/Fehlermeldungen zu erzeugen. Es werden also zu der zentralen Einheit Daten gesendet und empfangen.

Die Steuereinheit beinhaltet dann eine Steuerungslogik, die entscheidet, wann der Schütz 43 geschaltet werden soll. Zum Beispiel kann die Steuerlogik dabei nicht nur die durch die Personen-Sensoren gemessene Anwesenheit von Personen berücksichtigen, sondern auch eine Tageszeit. Weiterhin kann in der Steuereinheit 50 eine Aufzeichnung der Daten von den Sensoren und der Schaltvorgänge erfolgen. Insbesondere können die Messdaten und Schaltvorgänge, Umgebungstemperaturen (Temperatursensor in Schütz oder Bewegungs-Sensor) und Tageslicht- und/oder Kunstlichteintrag im Gebäude (LichtSensor in Schütz oder Bewegungs-Sensor) zusammen mit Uhrzeit und Datum in einer Projekt-Datei gespeichert werden, welche in einem Blockchain realisiert werden so dass eine spätere Modifikation der aufgezeichneten Daten ausgeschlossen werden kann. Die so erhobenen und gespeicherten Daten können für weitere Analysen verwendet werden. Vorzugsweise stellt Steuereinheit dazu eine Schnittstelle, mit der die Daten der Blockchain ausgelesen werden können.

### BEZUGSZEICHENLISTE

- 10: Lichtsystem
- 12: Leuchteneinsätze
- 14: Zuleitung
- 16: Unterverteilung
- 20: Lichtsystem
- 22: Leuchteneinsätze
- 24: Zuleitung
- 26: Bewegungs-Sensoren
- 28: Unterverteilung
- 30: Lichtsystem
- 32: Leuchteneinsätze
- 34: Zuleitung
- 36: Bewegungs-Sensoren
- 37: Netzeinspeiseklemme
- 38: Unterverteilung
- 39: Schütz
- 40: Lichtsystem
- 42: Vielzahl von Leuchten
- 43: Schütz
- 44: Zuleitung
- 46: Personen-Sensor
- 47: Netzeinspeiseklemme
- 48: Unterverteilung
- 50: Zentrale Steuereinheit
- 51: Funkverbindung

## Patentansprüche

1. Selbsttätig schaltendes Lichtsystem (40) für ein Gebäude, umfassend:
- eine Vielzahl von Leuchten (42),
- einen Personen-Sensor (46) zum Detektieren einer Person,
- einen durch den Personen-Sensor (46) geschalteten Schütz (43) zum Schalten wenigstens einer Teilgruppe der Vielzahl von Leuchten des Lichtsystems (40), und
- eine Steuerung (50), die dazu ausgebildet ist, den Schütz (43) anzusteuern,
wobei der Personen-Sensor (46) und/oder der Schütz (43) über Funk (51) mit der Steuerung (50) verbunden ist,
**dadurch gekennzeichnet, dass** der Schütz (43) zur Anordnung in einer Zuleitung (44) zwischen einer Unterverteilung (48) des Gebäudes und der Vielzahl von Leuchten (42) des Lichtsystems eingerichtet ist.

2. Lichtsystem (40) nach Anspruch 1, wobei der Schütz (43) zumindest drei Phasen einer Drehstromanbindung schaltet.

3. Lichtsystem (40) nach Anspruch 1, weiterhin umfassend eine Netzeinspeiseklemme (47), wobei die Vielzahl von Leuchten (42) über die Netzeinspeiseklemme (47) verbunden ist und wobei der Schütz (43) in der Zuleitung zwischen der Unterverteilung (48) und der Netzeinspeiseklemme (47) anordenbar ist.

4. Lichtsystem (40) nach einem der vorherigen Ansprüche, wobei die Vielzahl von Leuchten (42) als Lichtband angeordnet ist.

5. Lichtsystem (40) nach einem der vorherigen Ansprüche, wobei die Vielzahl von Leuchten (42) als Leuchteneinsätze für ein Tragschienensystem ausgebildet ist.

6. Lichtsystem (40) nach Anspruch 5, wobei der Personen-Sensor (46) auf dem Tragschienensystem angeordnet ist.

7. Lichtsystem (40) nach einem der vorherigen Ansprüche, wobei der Personen-Sensor (46) ein Bewegungssensor, insbesondere ein Passiv-Infrarot-Sensor, ist.

8. Lichtsystem (40) nach einem der vorherigen Ansprüche, weiterhin umfassend einen Speicher, eingerichtet zur Erfassung der Schaltvorgänge des Schützes (43) und zum Weiterleiten an ein übergeordnetes LMS/BMS-System oder die Steuerung.

9. Lichtsystem (40) nach einem der vorherigen Ansprüche, wobei das System weiterhin zumindest einen Temperatursensor und/oder zumindest einen Lichtsensor umfasst, wobei das System dazu ausgebildet ist, Temperaturmesswerte von dem zumindest einen Temperatursensor und/oder Lichtmesswerte von dem zumindest einen Lichtsensor, insbesondere über Funk, an eine zentrale Einheit zu übertragen.

10. Lichtsystem (40) nach einem der vorherigen Ansprüche, wobei der Schütz (43) dazu ausgebildet ist mindestens 1kW, vorzugsweise mindestens 10kW, zu schalten.

11. Verfahren zum Sanieren eines Bestands-Lichtsystems (40) für ein Gebäude mit einer Vielzahl von Leuchten (42) und einer Unterverteilung (48), wobei das Verfahren umfasst:
- Einbauen eines Personen-Sensors (46) zum Detektieren einer Person in das Bestands-Lichtsystem,
- Einbauen eines durch den Personen-Sensor geschalteten Schütz (43) zum Schalten wenigstens einer Teilgruppe der Vielzahl von Leuchten des Bestands-Lichtsystems in einer Zuleitung zwischen der Unterverteilung des Gebäudes und der Vielzahl von Leuchten des Bestands-Lichtsystems,
- Verbinden des Personen-Sensors (46) und/oder des Schütz (43) über Funk (51) mit einer Steuerung (50), die dazu ausgebildet ist, den Schütz (43) anzusteuern.

12. Verfahren nach Anspruch 11, wobei der Schütz (43) in die Zuleitung zwischen einer Netzeinspeiseklemme (47) des Bestands-Lichtsystems (40) und der Unterverteilung (48) eingebaut wird und wobei die Vielzahl von Leuchten (42) mit der Netzeinspeiseklemme (47) verbunden wird.

## Claims

1. A self-switching lighting system for a building, comprising:
- a plurality of lights,
- a person sensor for detecting a person,
- a contactor (43) switched by the person sensor (46) for switching at least one subgroup of the plurality of lights of the lighting system (40), and
- a controller (50) configured to drive the contactor (43), wherein the person sensor (46) and/or the contactor (43) is connected to the controller (50) via radio (51),
**characterised in that** the contactor (43) is arranged for arrangement in a supply line (44) between a sub-distribution (48) of the building and the plurality of lights (42) of the lighting system.

2. The lighting system (40) of claim 1, wherein the contactor (43) switches at least three phases of a three-phase connection.

3. The lighting system (40) of claim 1, further comprising a mains feed terminal (47), wherein the plurality of lights (42) is connected via the mains feed terminal (47), and wherein the contactor (43) is arrangeable in the supply line between the sub-distribution (48) and the mains feed terminal.

4. The lighting system (40) of any one of the preceding claims, wherein the plurality of lights (42) is arranged as a light strip.

5. The lighting system (40) of any one of the preceding claims, wherein the plurality of lights (42) is formed as light inserts for a support rail system.

6. The lighting system (40) of claim 5, wherein the person sensor (46) is arranged on the support rail system.

7. The lighting system (40) of any one of the preceding claims, wherein the person sensor (46) is a motion sensor, in particular a passive-infrared sensor.

8. The lighting system (40) of any one of the preceding claims, further comprising a memory arranged for detecting the switching operations of the contactor (43) and for forwarding to a higher-level LMS/BMS system or the controller.

9. The lighting system (40) of any one of the preceding claims, wherein the system further comprises at least one temperature sensor and/or at least one light sensor, wherein the system is configured to transmit temperature measurement values from the at least one temperature sensor and/or light measurement values from the at least one light sensor, in particular via radio, to a central unit.

10. The lighting system (40) of any one of the preceding claims, wherein the contactor (43) is configured to switch at least 1 kW, preferably at least 10 kW.

11. A method of refurbishing an existing lighting system (40) for a building having a plurality of lights (42) and a sub-distribution (48), the method comprising:
- installing a person sensor (46) for detecting a person in the existing lighting system,
- installing a contactor (43) switched by the person sensor for switching at least one subgroup of the plurality of lights of the existing lighting system in a supply line between the sub-distribution of the building and the plurality of lights of the existing lighting system,
- connecting the person sensor (46) and/or the contactor (43) via radio (51) to a controller (50) configured to drive the contactor (43).

12. The method of claim 11, wherein the contactor (43) is installed in the supply line between a mains feed terminal (47) of the existing lighting system (40) and the sub-distribution (48), and wherein the plurality of lights (42) is connected to the mains feed terminal (47).

## Revendications

1. Système d'éclairage à commutation automatique (40) pour un bâtiment, comprenant :
- une pluralité de luminaires (42),
- un capteur de personne (46) pour la détection d'une personne,
- un contacteur (43) actionné par le capteur de personne (46) pour la commutation d'au moins un groupe partiel de la pluralité de luminaires du système d'éclairage (40) et
- une commande (50), qui est conçue pour contrôler le contacteur (43),
dans lequel le capteur de personne (46) et/ou le contacteur (43) est relié par radio (51) avec la commande (50),
**caractérisé en ce qu** le contacteur (43) est conçu pour être disposé dans une ligne d'alimentation (44) entre une sous-distribution (48) du bâtiment et la pluralité de luminaires (42) du système d'éclairage.

2. Système d'éclairage (40) selon la revendication 1, dans lequel le contacteur (43) commute au moins trois phases d'une connexion de courant triphasé.

3. Système d'éclairage (40) selon la revendication 1, comprenant en outre une borne d'alimentation par réseau (47), dans lequel la pluralité de luminaires (42) est reliée par l'intermédiaire de la borne d'alimentation par réseau (47) et dans lequel le contacteur (43) peut être disposé dans la ligne d'alimentation entre a sous-distribution (48) et la borne d'alimentation par réseau (47).

4. Système d'éclairage (40) selon l'une des revendications précédentes, dans lequel la pluralité de luminaires (42) est disposé comme une bande lumineuse.

5. Système d'éclairage (40) selon l'une des revendications précédentes, dans lequel la pluralité de luminaires (42) est conçue comme des inserts lumineux pour un système de rail porteur.

6. Système d'éclairage (40) selon la revendication 5, dans lequel le capteur de personne (46) est disposé sur le système de rail porteur.

7. Système d'éclairage (40) selon l'une des revendications précédentes, dans lequel le capteur de personne (46) est un capteur de mouvement, plus particulièrement un capteur infrarouge passif.

8. Système d'éclairage (40) selon l'une des revendications précédentes, comprenant en outre une mémoire, conçue pour la détection des processus de commutation du contacteur (43) ou pour la transmission à un système LMS/BMS supérieur ou à la commande.

9. Système d'éclairage (40) selon l'une des revendications précédentes, dans lequel le système comprend en outre au moins un capteur de température et/ou au moins un capteur de lumière, dans lequel le système est conçu pour transmettre des valeurs de mesure de la température de l'au moins un capteur de température et/ou des valeurs de mesure de lumière de l'au moins un capteur de lumière, plus particulièrement par radio, à une unité centrale.

10. Système d'éclairage (40) selon l'une des revendications précédentes, dans lequel le contacteur (43) est conçu pour commuter au moins 1 kW, de préférence au moins 10 kW.

11. Procédé pour le contrôle d'un système d'éclairage (40) pour un bâtiment avec une pluralité de luminaires (42) et une sous-distribution (48), dans lequel le procédé comprend :
- l'insertion d'un capteur de personne (46) pour la détection d'une personne dans le système d'éclairage,
- l'insertion d'un contacteur (43) commuté par le capteur de personne, pour la commutation d'au moins un groupe partiel de la pluralité de luminaires du système d'éclairage dans une ligne d'alimentation entre la sous-distribution du bâtiment et la pluralité de luminaires du système d'éclairage,
- raccordement du capteur de personne (46) et/ou du contacteur (43) par radio (51) avec une commande (50), qui est conçue pour contrôler le contacteur (43).

12. Procédé selon la revendication 11, dans lequel le contacteur (43) est insérée dans la ligne d'alimentation entre une borne d'alimentation par réseau (47) du système d'éclairage (40) et de la sous-distribution (48) et dans lequel la pluralité de luminaires (42) est reliée avec la borne d'alimentation par réseau (47).
